# EUROPEAN PATENT APPLICATION

(11) **EP 4 592 569 A1**
(43) Date of publication of application: **30.07.2025**
(21) Application number: 25152255.3
(22) Date of filing: 16.01.2025
(51) Int. Cl.: F16K 11/07, F16K 31/06, F16K 31/42, F16K 31/60, F16K 35/06, F15B 13/043, F15B 13/10

(54) **ELECTROMAGNETIC PROPORTIONAL VALVE**

(30) Priority: 25.01.2024 JP 2024009693
(71) Applicant: NABTESCO CORPORATION, Chiyoda-ku Tokyo 102-0093 (JP)
(72) Inventor: Kobayashi, Masayuki, Tokyo 102-0093 (JP); Sumimoto, Atsushi, Tokyo 102-0093 (JP); Betsuyaku, Atsunori, Tokyo 102-0093 (JP)
(74) Representative: Grünecker Patent- und Rechtsanwälte PartG mbB

(57) **Abstract**

An electromagnetic proportional valve (30) includes: a valve unit (40) including a spool (42) movable in an axial direction, the valve unit controlling a control pressure to a controlled object (20) by moving the spool; a solenoid coil; a drive member (34, 34A) moving in the axial direction in response to application of electric current to the solenoid coil to drive the spool; and a pin (36) driving the spool in the axial direction in response to an external force. In response to the pin (36) moving into a first moving range, the spool (42) is driven to output the control pressure. In response to the pin moving further into a second moving range from the first moving range, the spool is further driven to discharge the control pressure.

## Description

### TECHNICAL FIELD

The present disclosure relates to an electromagnetic proportional valve.

### BACKGROUND

Japanese Patent Application Publication No. 2000-274547 describes an electromagnetic proportional valve that adjusts an excitation current applied to a solenoid actuator to move the position of a spool. In this way, it is possible to control the supply and discharge of pilot oil to/from a hydraulic equipment to be controlled.

In this electromagnetic proportional valve, if a failure occurs in an electrical system for controlling the solenoid actuator, it becomes difficult or impossible to move the spool. To handle this, a manual pin is provided in the electromagnetic proportional valve to manually change the position of the spool.

In the above electromagnetic proportional valve, there is only one position to which the spool is moved by the manual pin operation. Thus, it is not possible to perform both forced activation and stop of a controlled object by operating the manual pin. Therefore, there is a demand for an electromagnetic proportional valve that enables both the forced activation and stop of the controlled object by operating the manual pin.

### SUMMARY

An electromagnetic proportional valve according to one aspect of the disclosure includes: a valve unit including a spool movable in an axial direction, the valve unit controlling a control pressure to a controlled object by moving the spool; a solenoid coil; a drive member moving in the axial direction in response to application of electric current to the solenoid coil to drive the spool; and a pin driving the spool in the axial direction in response to an external force. In response to the pin moving into a first moving range, the spool is driven to output the control pressure, and in response to the pin moving further into a second moving range from the first moving range, the spool is further driven to discharge the control pressure.

With the above configuration, the spool is drive by moving the pin into the first moving range to output the control pressure from the valve unit to the controlled object. In addition, by moving the manual pin from the first moving range into the second moving range, the proportional valve spool is further driven to discharge the control pressure. Thus, it is possible to realize both the forced activation and stop of the controlled object by operating the pin.

In the above electromagnetic proportional valve, the valve unit may further include a spring that biases the spool in a direction opposite to a direction in which the spool is driven by movement of the pin. When the pin is situated in the first moving range, a reaction force may be applied to the spool by the control pressure, and when the pin is released from the external force, the pin may be pushed back together with the drive member by the spring.

In the above electromagnetic proportional valve, the valve unit may further include a drain chamber from which the control pressure is dischargeable, and a discharge passage connectible to the drain chamber. When the pin is situated in the second moving range, the discharge passage may be connected to the drain chamber, and when the pin is situated outside of the second moving range, the discharge passage may be disconnected from the drain chamber.

In the above electromagnetic proportional valve, the valve unit may further include a pressure chamber to which the control pressure is supplied from a pump and a control pressure passage through which the control pressure is outputted to the controlled object. The spool may be driven by movement of the drive member in response to the application of the electric current to the solenoid coil to output the control pressure from the pressure chamber to the control pressure passage. The spool may be driven by movement of the drive member in response to the pin moving into the first moving range to output the control pressure from the pressure chamber to the control pressure passage.

In the above electromagnetic proportional valve, the controlled object may be a directional control valve device that switches supply and discharge of hydraulic fluid supplied to an actuator.

### ADVANTAGEOUS EFFECTS

According to the aspects of the disclosure, it is possible to realize both the forced activation of a hydraulic equipment and stop of the hydraulic equipment by operating the manual pin.

### BRIEF DESCRIPTION OF THE DRAWINGS

Fig. 1 is a sectional view of a directional control valve device equipped with an electromagnetic proportional valve according to one embodiment of the disclosure.
Fig. 2 is a sectional view illustrating an operation of the electromagnetic proportional valve of Fig. 1.
Fig. 3 is a sectional view illustrating an operation of the electromagnetic proportional valve of Fig. 1.
Fig. 4 is a sectional view illustrating an operation of the electromagnetic proportional valve of Fig. 1.
Fig. 5 is a side view illustrating snap pin removal and attachment in the electromagnetic proportional valve of Fig. 1.
Fig. 6 is a sectional view illustrating an operation of the electromagnetic proportional valve of Fig. 1.
Fig. 7 is a sectional view illustrating an operation of the electromagnetic proportional valve of Fig. 1.
Fig. 8 is an enlarged sectional view illustrating an operation of the electromagnetic proportional valve of Fig. 1.

### DESCRIPTION OF THE EMBODIMENTS

### [Embodiment]

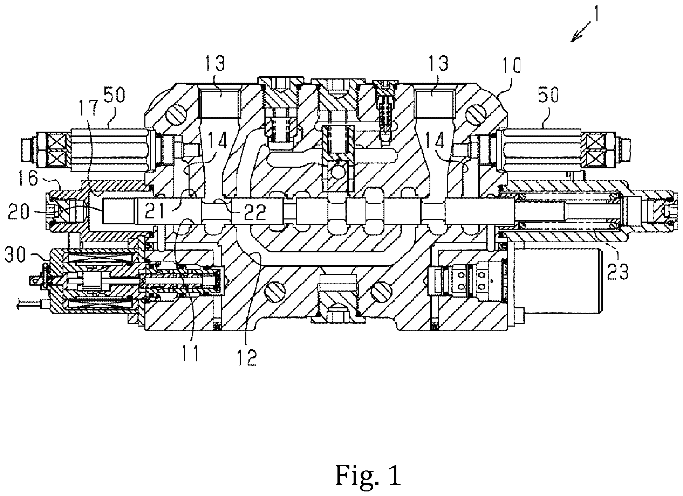

With reference to Fig. 1 to Fig. 8, an embodiment of a directional control valve device equipped with an electromagnetic proportional valve will now be described. The electromagnetic proportional valve controls a control pressure to a controlled object. The controlled object is a directional control valve device that switches supply and discharge of hydraulic fluid supplied to the actuator.

### [Directional Control Valve Device 1]

As shown in Fig. 1, the directional control valve device 1 includes a valve body block 10, a main spool 20, an electromagnetic proportional valve 30, and a relief valve 50. The valve body block 10 has a main spool hole 11 and an actuator passage 13. The main spool 20 slides in the main spool hole 11. The actuator passage 13 opens in the main spool hole 11 and is connected to the actuator. The electromagnetic proportional valve 30 controls the supply of a spool pressure to drive the main spool 20. The relief valve 50 is a valve that opens and closes depending on the internal pressure of the actuator passage 13.

The valve body block 10 is a cuboid block body. The main spool hole 11 is formed inside the valve body block 10. The main spool hole 11 is a hole having a circular cross section. The main spool hole 11 extends in the axial direction and opens from the valve body block 10 toward the outside. The main spool 20 has a cylindrical shape. The main spool 20 is provided in the main spool hole 11 coaxially with the main spool hole 11. The main spool 20 is slidable in the main spool hole 11 in the axial direction of the main spool 20.

### [Main Spool 20]

The main spool 20 has a plurality of land portions 21 that are spaced apart from each other in the axial direction and a plurality of notched portions 22 provided between the land portions 21. The outer diameter of each land portion 21 approximately matches the inner diameter of the main spool hole 11. Whereas the outer diameter of each notched portion 22 is smaller than the inner diameter of the main spool hole 11.

When the land portion 21 is positioned so that it spans two openings of two passages described below that open into the main spool hole 11 and covers the entirety of each opening, it shuts off the flow of hydraulic fluid between these two passages. Whereas when the notched portion 22 is positioned so that it spans the two openings described above, it forms a passage that connects these two passages and allows the hydraulic fluid to flow. The main spool 20 can not only switch between connecting and disconnecting the two passages, but also adjust the opening degree between the two passages, in other words, the valve opening degree, by its position.

### [Valve Body Block 10]

In addition to the main spool hole 11, the valve body block 10 has a feed passage 12 and a tank passage 14. The hydraulic fluid flows through these passages.

### [Feed Passage 12]

The supply passage 12 is a channel for supplying the hydraulic fluid from a pump (not shown) to the actuator. The pump that supplies the hydraulic fluid to the supply passage 12 is different from a pump that supplies hydraulic fluid to the electromagnetic proportional valve 30. Alternatively, it is possible to use the same pump to supply the hydraulic fluid to the supply passage 12 and to the electromagnetic proportional valve 30. In this case, it is preferable to provide a pressure reducing valve between the electromagnetic proportional valve 30 and the pump.

The supply passage 12 is the channel for supplying the hydraulic fluid from the pump to the actuator through the main spool hole 11 and actuator passage 13. The supply passage 12 opens into the main spool hole 11. When the opening of the supply passage 12 into the main spool hole 11 is blocked by the land portion 21 of the main spool 20 (Fig. 1), the connection between the supply passage 12 and the main spool hole 11 and the actuator passage 13 is cut off.

### [Actuator Passage 13]

The actuator passage 13 is a passage that opens into the main spool hole 11 and is connected to the actuator. The actuator passage 13 opens into the main spool hole 11 along the radial direction of the main spool 20 and also opens to the outside of the valve body block 10 along the radial direction of the main spool 20.

### [Tank Passage 14]

The tank passage 14 is a passage that opens into the main spool hole 11 and is connected to a tank (not shown). The tank passage 14 is the passage for returning the hydraulic fluid discharged from the actuator to the tank. The tank passage 14 is connected to or disconnected from the actuator passage 13 depending on the position of the main spool 20. The tank connected to tank passage 14 is different from the tank from which the hydraulic fluid is discharged from the electromagnetic proportional valve 30.

The opening of the tank passage 14 into the main spool hole 11 is situated on the outer side in the axial direction than the opening portion of the actuator passage 13 into the main spool hole 11. Thus, when the tank passage 14 is connected to the actuator passage 13, the hydraulic fluid from the actuator passage 13 is discharged through the opening of the tank passage 14 into the main spool hole 11.

### [Pressure Chamber Forming Cover 16]

The valve body block 10 includes a pressure chamber forming cover 16. The pressure chamber forming cover 16 has a main spool pressure chamber 17 and is fixed to the valve body block 10. The main spool pressure chamber 17 is connected to a control pressure passage 15 that supplies a control pressure from the electromagnetic proportional valve 30. The control pressure passage 15 is formed in the valve body block 10. Thus, the control pressure is supplied from the control pressure passage 15 to the main spool pressure chamber 17 to apply the control pressure on the end of the main spool 20. The other end of the main spool 20 opposite the end on which the control pressure acts is biased toward the left side in the drawing by a bias member 23. This configuration allows the position of the main spool 20 to be adjusted by adjusting the control pressure in the main spool pressure chamber 17.

### [State Transition]

The directional valve device 1 is capable of transition to supply, neutral, and discharge states depending on the position of the main spool 20 in the main spool hole 11. In the supply state, the supply passage 12 is connected to the actuator passage 13 and the actuator passage 13 is disconnected from the tank passage 14. In the neutral state, the supply passage 12 is disconnected from the actuator passage 13 and the actuator passage 13 is disconnected from the tank passage 14. In the discharge state, the actuator passage 13 is connected to the tank passage 14 and the supply passage 12 is disconnected from the actuator passage 13.

### [Electromagnetic Proportional Valve 30]

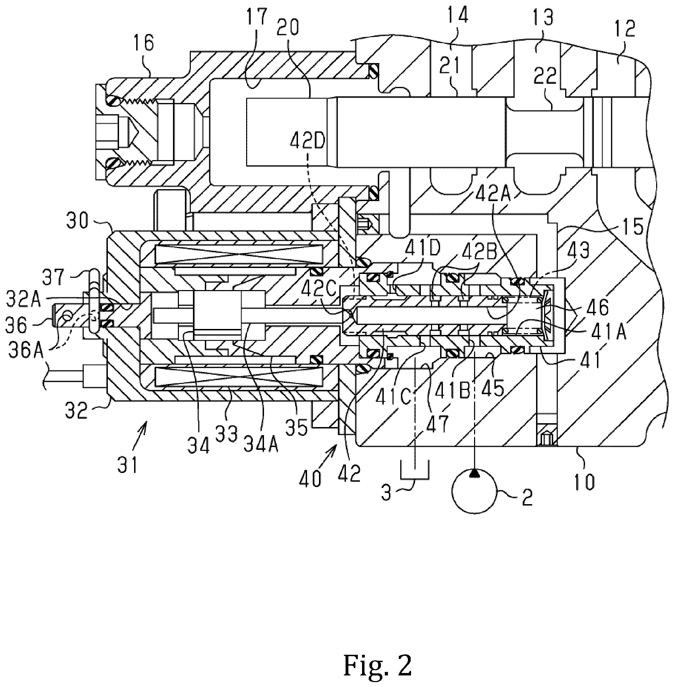

As shown in Fig. 2, the electromagnetic proportional valve 30 includes a drive device 31 and a valve unit 40. The drive device 31 and valve unit 40 are arranged coaxially.

### [Valve Unit 40]

The valve unit 40 is installed in a space formed in the valve body block 10. The valve unit 40 includes a socket 41 and a proportional valve spool 42. The valve unit 40 further includes a first pressure chamber 45 connected to a pump 2, which is the pressure source, a second pressure chamber 46 that supplies the control pressure to the main spool 20 to be controlled, and a drain chamber 47 connected to a tank 3. The second pressure chamber 46 is connected to the control pressure passage 15. The control pressure flows from the second pressure chamber 46 to the main spool pressure chamber 17 through the control pressure passage 15 and the control pressure is applied to the end of the main spool 20. Connection passages between the first pressure chamber 45 and the pump 2 and between the drain chamber 47 and the tank 3 are both omitted from the illustration.

The socket 41 is a cylindrical member and has a first communication hole 41B and a second communication hole 41C. The first communication hole 41B extends in the radial direction and connects a proportional valve spool hole 41A and the first pressure chamber 45. The second communication hole 41C extends in the radial direction and connects the proportional valve spool hole 41A and the drain chamber 47. The proportional valve spool 42 is a bottomed cylindrical member. The proportional valve spool 42 is inserted into the inner space of the socket 41. The outer diameter of the proportional valve spool 42 approximately matches the inner diameter of the socket 41. The proportional valve spool 42 has an axial hole 42A and a radial hole 42B. The axial hole 42A is a hole extending in the axial direction of the proportional valve spool 42. The radial hole 42B is a hole formed in the radial direction and is connected with the axial hole 42A. A through hole 42C is formed in the bottom of the proportional valve spool 42. A notch 42D is formed on the outer circumference of the socket 41 on a drive rod 34A side. The socket 41 has a discharge hole 41D.

### [Drive Device 31]

The drive device 31 controls the axial position of the proportional valve spool 42 by exerting an axial force on the proportional valve spool 42. The drive device 31 includes a hollow housing 32, a solenoid coil 33, a plunger 34, and a cylindrical member 35. The solenoid coil 33 is disposed in the hollowed space of housing 32. The plunger 34 is driven by the solenoid coil 33. The plunger 34 has a drive rod 34A extending from the plunger 34. The cylindrical member 35 guides the plunger 34.

The housing 32 has a bottomed cylindrical shape. The opening of the housing 32 opens toward the valve unit 40. The cylindrical member 35 is inserted into the space of the valve unit 40 formed in the valve body block 10 to seal the space of the valve unit 40. A through hole 32A extending in the axial direction is formed in the bottom of the housing 32.

The cylindrical member 35 has a bottomed cylindrical shape that extends in the axial direction. The inner diameter of the cylindrical member 35 is approximately equal to the outer diameter of the plunger 34. The inner diameter of the portion of the cylindrical member 35 through which the drive rod 34A passes is approximately equal to the outer diameter of the drive rod 34A.

The plunger 34 and drive rod 34A are movable in the axial direction. The drive rod 34A extends axially from the plunger 34. The tip (right end in the drawing) of the drive rod 34A is in contact with the base end (left end in the drawing) of the proportional valve spool 42. The proportional valve spool 42 is biased by a spring 43 in the direction opposite to that in which a manual pin 36 pushes it. This maintains contact between the drive rod 34A and the proportional valve spool 42. The spring 43 corresponds to the bias member. A portion of the base end of the proportional valve spool 42 that contacts the drive rod 34A is grooved. This allows the hydraulic fluid to pass through even when the drive rod 34A is in contact with the base end of the proportional valve spool 42.

At least a portion of the plunger 34 is made of a magnetic material. The plunger 34 is situated at least partly inside the solenoid coil 33 in the radial direction. The plunger 34 is driven by the solenoid coil 33. In other words, the plunger 34 moves axially when driven by the solenoid coil 33. Specifically, by applying an excitation current to the solenoid coil 33, the plunger 34 and drive rod 34A move in the axial direction to move the proportional valve spool 42 to the right in the drawing. In this way, the plunger 34 and drive rod 34A drive the proportional valve spool 42. The member that drives the proportional valve spool 42 by electrical control is herein called a drive member. The proportional valve spool 42 is driven by the axial movement of the plunger 34 and drive rod 34A, so the plunger 34 and drive rod 34A are the drive members. The drive members may include other components in addition to the plunger 34 and drive rod 34A. The manual pin 36 is not included in the drive members because it is manually moved and is not electrically driven.

The proportional valve spool 42, driven by the plunger 34 and drive rod 34A, is moved in the axial direction toward the right in the drawing. At this time, the control pressure is outputted from the second pressure chamber 46 to the control pressure passage 15. When the supply of the excitation current to the solenoid coil 33 is stopped, the proportional valve spool 42 is moved to the left in the drawing in the axial direction together with the plunger 34 and drive rod 34A by the bias force from the spring 43. In this way, the position of the proportional valve spool 42 in the axial direction can be changed by applying the exciting current to the solenoid coil 33.

### [Relief Valve 50]

The relief valve 50 is provided in the valve body block 10. The relief valve 50 opens and closes the tank passage 14 in the valve body block 10 depending on the internal pressure of the actuator passage 13. When the relief valve 50 opens, the actuator passage 13 and the tank passage 14 are connected to each other.

### [Manual Pin 36]

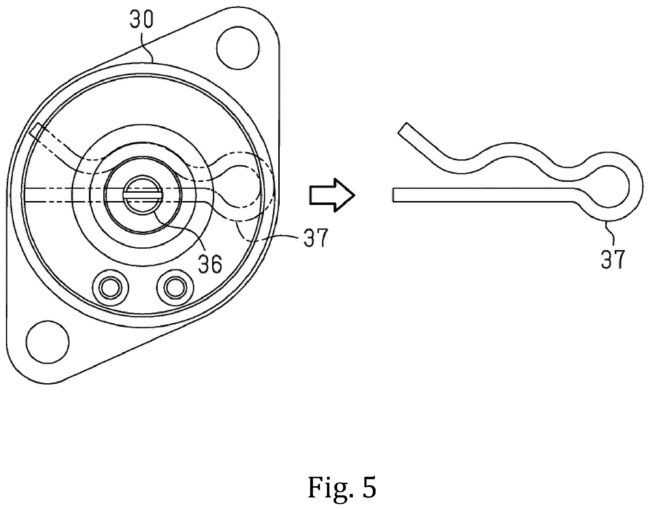

The solenoid proportional valve 30 is equipped with the manual pin 36. The manual pin 36 moves the proportional valve spool 42 in the axial direction. The manual pin 36 is a cylindrical member. The manual pin 36 is inserted into the through hole 32A of the housing 32 and its one end protrudes out from the housing 32. The manual pin 36 is coaxial with the plunger 34 and is capable of pushing the plunger 34 in the axial direction in response to an external force. As shown in Fig. 5, the manual pin 36 is secured to the housing 32 by a snap pin 37. The manual pin 36 becomes movable axially by pulling out the snap pin 37 when in use. As shown in Fig. 2, the manual pin 36 has two fixing holes 36A. The manual pin 36 can be fixed in two positions corresponding to the fixing holes 36A. When the manual pin 36 is pushed into the housing 32 with the snap pin 37 pulled out of the fixing holes 36A, it contacts the drive rod 34A of the plunger 34 and moves with the plunger 34. The plunger 34 contacts the proportional valve spool 42 and moves the proportional valve spool 42. When the proportional valve spool 42 moves axially most to the right in the drawing, the notch 42D is connected to the drain chamber 47 via the discharge hole 41D. When the proportional valve spool 42 is at other than the axial most right in the drawing, the notch 42D is disconnected from the drain chamber 47. The notch 42D corresponds to the discharge passage.

When the manual pin 36 is moved in a first moving range, the proportional valve spool 42 is driven to output the control pressure from the valve unit 40 to the main spool pressure chamber 17. The first moving range is the range where the first pressure chamber 45 and the second pressure chamber 46 are connected to each other. Specifically, the first moving range is a part of the moving range of the manual pin 36 in which the radial hole 42B of the proportional valve spool 42 and the first connecting hole 41B of the socket 41 are connected and communicated. When the manual pin 36 is moved further from the first moving range to the second moving range, the proportional valve spool 42 is driven and the control pressure is discharged from the valve unit 40 to the main spool pressure chamber 17. The second moving range is a part of the moving range of the manual pin 36 in which the second pressure chamber 46 and the drain chamber 47 are connected to each other. Specifically, the second moving range is the range in which the notch 42D and the drain hole 41D are communicated with each other.

### [Operation in Embodiment]

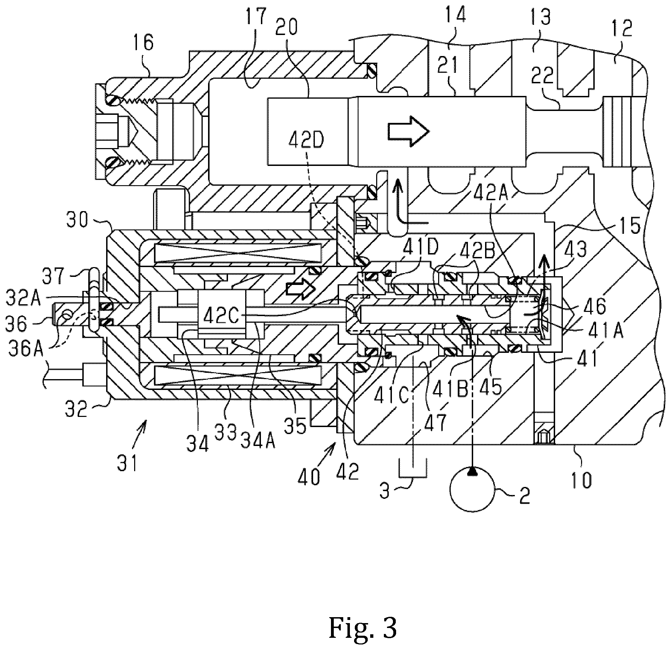

The following now describes how the directional control valve device 1 operates. As shown in Fig. 3, when an excitation current is applied to the solenoid coil 33, the plunger 34 is driven to the right in the drawing and the proportional valve spool 42 is driven to the right in the drawing together with the plunger 34. At this time, the control pressure is outputted from the first pressure chamber 45 to the control pressure passage 15 through the radial hole 42B and axial hole 42A. The control pressure flows from the control pressure passage 15 into the main spool pressure chamber 17, and the control pressure is applied to the end of the main spool 20. When the main spool 20 is pushed to the right side in the drawing, the directional control valve device 1 is in the supply state in which the supply passage 12 and the actuator passage 13 are connected to each other.

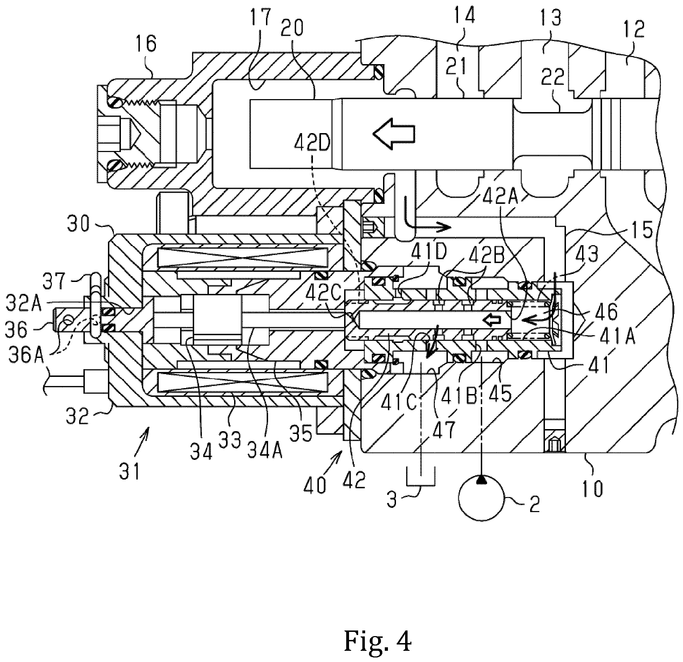

As shown in Fig. 4, when the application of the excitation current to the solenoid coil 33 has stopped, the plunger 34 is driven to the left in the drawing together with the proportional valve spool 42 by the bias force of the spring 43. At this time, the control pressure is discharged from the control pressure passage 15 to the drain chamber 47 through the radial hole 42B and axial hole 42A. As the control pressure is discharged from the main pool pressure chamber 17, the main spool 20 is moved to the left in the drawing by the force of the biasing member 23. Once the main spool 20 is moved to the left in the drawing, the directional control valve device 1 is in the neutral state in which the supply passage 12 and the actuator passage 13 are disconnected from each other.

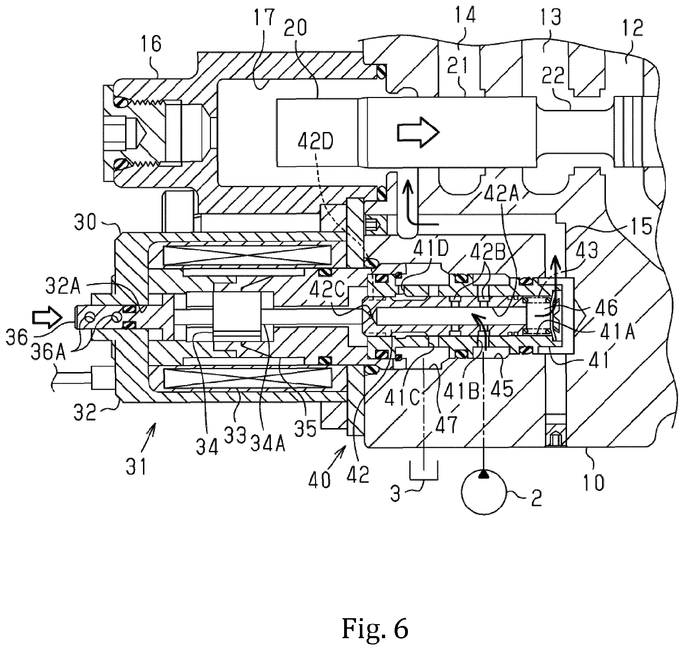

If an electrical system failure occurs and the plunger 34 cannot be driven by the solenoid coil 33, the main spool 20 can be driven by operating the manual pin 36. As shown in Fig. 5, the snap pin 37 is pulled out from the manual pin 36 to allow the manual pin 36 to move. Then, as shown in Fig. 6, when the manual pin 36 is pushed in slightly, the proportional valve spool 42 is driven to the right in the drawing together with the plunger 34. At this time, the control pressure is outputted from the first pressure chamber 45 to the control pressure passage 15 through the radial hole 42B and axial hole 42A. The control pressure flows from the control pressure passage 15 into the main spool pressure chamber 17, and the control pressure is applied to the end of the main spool 20. When the main spool 20 is pushed to the right side in the drawing, the directional control valve device 1 is in the supply state in which the supply passage 12 and the actuator passage 13 are connected to each other.

The manual pin 36 is pushed back to the left in the drawing by the reaction force of the second pressure chamber 46. Thus, when the manual pin 36 is released from being pushed in, i.e., the manual pin 36 is released from the external force, the manual pin 36 returns to its original position. Only when the manual pin 36 is pushed in, the directional control valve device 1 is in the supply state. Thus, the actuator can be operated to a position at which danger can be avoided and then the actuator can be stopped.

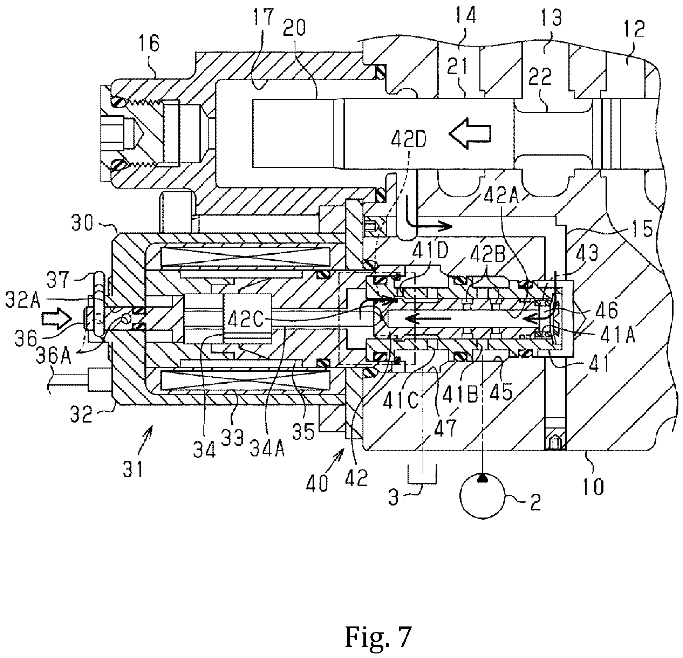

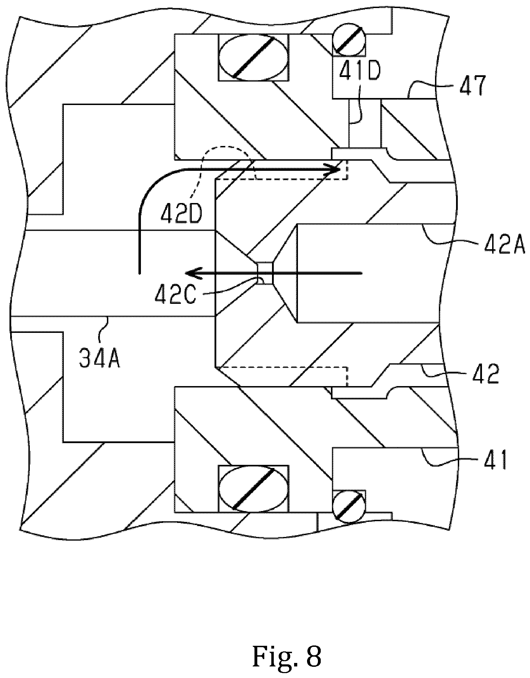

As shown in Figs. 7 and 8, when the manual pin 36 is further pushed in, the proportional valve spool 42 is further driven to the right in the drawing together with the plunger 34. At this time, the radial hole 42B is blocked by the socket 41, thus shutting off the input from the first pressure chamber 45. The hydraulic fluid in the second pressure chamber 46 passes through the axial hole 42A and through hole 42C of the proportional valve spool 42 and is then discharged into the drain chamber 47 through the notch 42D and the discharge hole 41D. As the control pressure is discharged from the main pool pressure chamber 17, the main spool 20 is moved to the left in the drawing by the force of the biasing member 23. Once the main spool 20 is moved to the left in the drawing, the directional control valve device 1 is in the neutral state in which the actuator passage 13 and the tank passage 14 are disconnected from each other. Thus, the actuator can be stopped safely.

By inserting the snap pin 37 into the fixing hole 36A while the manual pin 36 is pushed into the housing 32, the manual pin 36 can be inserted and secured in the housing 32. Thus, the actuator can be kept in a stopped state.

### [Advantageous Effects Of Embodiment]

Advantageous effects of the above embodiment will be now described.
(1) When the manual pin 36 is moved in the first moving range, the proportional valve spool 42 is driven to output the hydraulic fluid from the valve unit 40 to the main spool pressure chamber 17. When the manual pin 36 is moved further from the first moving range into the second moving range, the proportional valve spool 42 is further driven and the control pressure is discharged from the valve unit 40 to the main spool pressure chamber 17. Therefore, it is possible to perform both the forced activation of the directional control valve device 1 and stop the directional control valve device 1 by operating the manual pin 36.
(2) A reaction force is applied to the proportional valve spool 42 by the spring 43. Thus, when the manual pin 36 is released, the spring 43 pushes the manual pin 36 back together with the plunger 34. Therefore, the directional control valve device 1 can be operated only when the manual pin 36 is operated. After operating the directional control valve device 1 as much as necessary, the operation of the directional control valve device 1 can be stopped by stopping the operation of the manual pin 36.
(3) The notch 42D is connected to the drain chamber 47 only when the manual pin 36 is in the second moving range. Therefore, when the manual pin 36 is moved into the second moving range, the hydraulic fluid is discharged into the drain chamber 47 to stop the operation of the directional valve system 1.
(4) In response to the application of the excitation current to the solenoid coil 33, the plunger 34 is moved to drive the proportional valve spool 42, and the hydraulic fluid is supplied from the first pressure chamber 45 to the control pressure passage 15. Similarly, the proportional valve spool 42 is driven by the movement of the plunger 34 in response to the manual pin 36 moving into the first moving range, and the control pressure is outputted from the first pressure chamber 45 to the control pressure passage 15.
(5) Since the supply and discharge of the hydraulic fluid by the directional control valve device 1 can be switched by operating the manual pin 36, it is possible to perform both forced activation of the actuator and stop of the actuator.

### [Other Embodiments]

The foregoing embodiment can be modified as described below. The above embodiment and the following modifications can be implemented in combination to the extent where they are technically consistent to each other.

In the above embodiment, the manual pin 36 may be fixed by the snap pin 37 at the position where the manual pin 36 is slightly pushed in. In the above embodiment, the manual pin 36 is fixed by snap pin 37. Alternatively, as long as the manual pin 36 can be fixed, other shapes and configurations may be adopted, not limited to the snap pin 37.

In the above embodiment, the spring 43 is provided inside the socket 41 to bias the proportional valve spool 42 toward the drive device 31. Alternatively, the spring that forces in the opposite direction to the manual pin 36 may be provided at other positions. For example, a spring may be provided between the cylindrical member 35 of the drive device 31 and the proportional valve spool 42 to bias the proportional valve spool 42 toward the drive device 31.

In the above embodiment, when the manual pin 36 moves into the second moving range, the proportional valve spool 42 moves and the notch 42D is connected to the drain chamber 47. Alternatively, as long as it is connected to the drain chamber 47 when the manual pin 36 moves into the second moving range, it is not limited to the notch 42D, but can be a radial hole in the proportional valve spool 42 or the like.

In the above embodiment, the control pressure passage 15 may be omitted and connected directly from the second pressure chamber 46 to the main spool pressure chamber 17. The second pressure chamber 46 and the main spool pressure chamber 17 may be integrated as a single pressure chamber.

In the above embodiment, the controlled object is the directional control valve device 1 that switches the supply and discharge of the hydraulic fluid supplied to the actuator. However, any other control targets may be used as long as the control pressure is controlled by the valve unit 40.

They may be combined into a single part, and any one of them may be divided into a plurality of physically separate constituent parts. Irrespective of whether or not the constituent parts are integrated, they are acceptable as long as they are configured to solve the problems.

## Claims

1. An electromagnetic proportional valve (30), comprising:
a valve unit (40) including a spool (42) movable in an axial direction, the valve unit controlling a control pressure to a controlled object (20) by moving the spool;
a solenoid coil;
a drive member (34, 34A) moving in the axial direction in response to application of electric current to the solenoid coil to drive the spool; and
a pin (36) capable of driving the spool in the axial direction in response to an external force,
wherein, in response to the pin (36) moving into a first moving range, the spool (42) is driven to output the control pressure, and
wherein, in response to the pin moving further into a second moving range from the first moving range, the spool is further driven to discharge the control pressure.

2. The electromagnetic proportional valve of claim 1, wherein the valve unit further includes a spring (43) that biases the spool in a direction opposite to a direction in which the spool is driven by movement of the pin,
wherein when the pin is situated in the first moving range, a reaction force is applied to the spool by the control pressure, and
wherein when the pin is released from the external force, the pin is pushed back together with the drive member by the spring.

3. The electromagnetic proportional valve of claim 1, wherein the valve unit further includes:
a drain chamber (47) from which the control pressure is dischargeable; and
a discharge passage (42D) connectible to the drain chamber,
wherein when the pin is situated in the second moving range, the discharge passage is connected to the drain chamber, and
wherein when the pin is situated outside of the second moving range, the discharge passage is disconnected from the drain chamber.

4. The electromagnetic proportional valve of claim 1, wherein the valve unit further includes:
a pressure chamber (45) to which the control pressure is supplied from a pump; and
a control pressure passage (15) through which the control pressure is outputted to the controlled object,
wherein the spool is driven by movement of the drive member in response to the application of the electric current to the solenoid coil to output the control pressure from the pressure chamber to the control pressure passage, and
wherein the spool is driven by movement of the drive member in response to the pin moving into the first moving range to output the control pressure from the pressure chamber to the control pressure passage.

5. The electromagnetic proportional valve of any one of claims 1 to 4, wherein the controlled object is a directional control valve device that switches supply and discharge of hydraulic fluid supplied to an actuator.
